# EUROPÄISCHE PATENTANMELDUNG

(11) **EP 2 604 390 A1**
(43) Veröffentlichungstag der Anmeldung: **19.06.2013**
(21) Anmeldenummer: 11193725.6
(22) Anmeldetag: 15.12.2011
(51) Int. Cl.: B25C 5/11, B25C 5/16, F24D 3/14

(54) **Vorrichtung für die Bevorratung und Zuführung von Rohrhaltern zur Fixierung von Rohren**

(71) Anmelder: Roth Werke GmbH, 35232 Dautphetal (DE)
(72) Erfinder:
(74) Vertreter: Rohmann, Michael

(57) **Zusammenfassung**

Vorrichtung für die Bevorratung und Zuführung von Rohrhaltern zur Fixierung von Rohren (2) an einem Untergrund (3), wobei die Vorrichtung eine Basisstange (4) mit einem daran angeschlossenen Handgriff (5) sowie eine an die Basisstange angeschlossene Stempeleinrichtung (6) mit einem bewegbaren Stempel zum Einbringen der Rohrhalter in den Untergrund aufweist. Die Vorrichtung ist fernerhin mit zumindest einer Magazinstange (8) für die Aufnahme bzw. Bevorratung einer Mehrzahl von Rohrhaltern ausgestattet. Die Magazinstange ist mit der Maßgabe ausgebildet, dass wahlweise Rohrhalter unterschiedlicher Größe aufgenommen bzw. bevorratet werden können.

## Beschreibung

Die Erfindung betrifft eine Vorrichtung für die Bevorratung und Zuführung von Rohrhaltern, insbesondere von U-förmigen Rohrhaltern zur Fixierung von Rohren, insbesondere zur Fixierung von Heizrohren einer Fußbodenheizung, an einem Untergrund, insbesondere an einer wärmeisolierenden Dämmschicht. Die Rohrhalter bzw. die U-förmigen Rohrhalter bestehen zweckmäßigerweise aus Kunststoff. Bei der wärmeisolierenden Dämmschicht handelt es sich nach einer Ausführungsform um eine Dämmschicht aus geschäumtem Kunststoff.

Vorrichtungen der vorstehend genannten Art sind aus der Praxis in verschiedenen Ausführungsformen bekannt. In der Regel wird bei diesen Vorrichtungen eine Mehrzahl von Rohrhaltern auf einer Magazinstange magaziniert und einer Stempeleinrichtung zugeführt. Ein Rohrhalter ist mit Hilfe eines bewegbaren Stempels in den Untergrund bzw. in die Dämmschicht einstoßbar. Dabei übergreifen die Rohrhalter Rohre bzw. Heizrohre, die auf diese Weise an dem Untergrund bzw. an der Dämmschicht fixiert werden. In der Regel weist die Stempeleinrichtung der Vorrichtung an ihrer Unterseite eine Ausnehmung für das zu fixierende Rohr auf. Mit dieser Ausnehmung wird die Vorrichtung auf das zu befestigende Rohr aufgesetzt und dann der Rohrhalter mit Hilfe des bewegbaren Stempels in den Untergrund bzw. in die Dämmschicht eingestoßen.

Derartige Vorrichtungen werden im Übrigen auch als "Tacker" oder "Tackerwerkzeuge" bezeichnet. Diese Vorrichtungen sind vorwiegend zur Fixierung von Rohren und insbesondere zur Fixierung von Heizrohren mit einem Außendurchmesser von 14 bis 20 mm ausgelegt. Da die Größe der zu magazinierenden und einzustoßenden Rohrhalter an den Außendurchmesser der Rohre angepasst ist, müssen für verschiedene Außendurchmesser der Rohre bzw. zumindest für deutlich verschiedene Außendurchmesser der Rohre, bislang unterschiedliche Vorrichtungen eingesetzt und vorgehalten werden. Das ist natürlich aufwendig. Im Übrigen ist heute ein Trend zu Rohren bzw. Heizrohren mit noch geringeren Außendurchmessern bis 10 mm festzustellen. Auch für die Fixierung solcher Rohre mit derart geringem Außendurchmesser wären spezielle Vorrichtungen anzufertigen und vorzuhalten. Auch das wäre mit einem beachtlichen Aufwand verbunden.

Demgegenüber liegt der Erfindung das technische Problem zugrunde, eine Vorrichtung der eingangs genannten Art anzugeben, bei der die vorgenannten Nachteile vermieden werden können und die sich durch einen geringen apparativen und materiellen Aufwand auszeichnet.

Zur Lösung dieses technischen Problems lehrt die Erfindung eine Vorrichtung für die Bevorratung und Zuführung von Rohrhaltern, insbesondere von U-förmigen Rohrhaltern zur Fixierung von Rohren - insbesondere zur Fixierung von Heizrohren einer Fußbodenheizung - an einem Untergrund, insbesondere an einer wärmeisolierenden Dämmschicht,
wobei die Vorrichtung eine Basisstange mit einem daran angeschlossenen Handgriff sowie eine an die Basisstange angeschlossene Stempeleinrichtung mit einem bewegbaren Stempel zum Einbringen der Rohrhalter in den Untergrund aufweist,
wobei die Vorrichtung fernerhin mit zumindest einer Magazinstange für die Aufnahme bzw. Bevorratung einer Mehrzahl von Rohrhaltern ausgestattet ist und wobei die Magazinstange mit der Maßgabe ausgebildet ist, dass wahlweise Rohrhalter unterschiedlicher Größe und/oder unterschiedlicher Form aufgenommen bzw. bevorratet werden können.

Die bevorzugt eingesetzten U-förmigen Rohrhalter weisen eine U-Basis und zwei daran angeschlossene U-Schenkel auf. Die U-Basis ist vorzugsweise gebogen bzw. teilkreisförmig gebogen ausgebildet und zweckmäßigerweise an den Außendurchmesser der zu fixierenden Rohre angepasst. Die U-Schenkel weisen in der Regel spitze Enden auf, mit denen die Rohrhalter in den Untergrund eingebracht bzw. eingestoßen werden. Bevorzugt ist an dem Ende jedes U-Schenkels zumindest ein Widerhaken zur Verhakung des Rohrhalters in dem Untergrund vorgesehen. Wie oben bereits dargelegt, bestehen die U-förmigen Rohrhalter empfohlenermaßen aus Kunststoff. Es liegt im Rahmen der Erfindung, dass die zu fixierenden Rohre bzw. Heizrohre einen kreisförmigen bzw. einen im Wesentlichen kreisförmigen Querschnitt aufweisen. Die wärmeisolierende Dämmschicht besteht gemäß einer Ausführungsform aus geschäumtem Kunststoff. Hier sind aber auch andere Materialien wie eine Schicht auf Basis von Holzfasern oder dergleichen denkbar.

Es liegt im Rahmen der Erfindung, dass durch Betätigung des Handgriffes bzw. durch Niederdrücken des Handgriffes die an den Handgriff angeschlossene Basisstange auf den Stempel der Stempeleinrichtung einwirkt und diesen zum Untergrund bzw. zur Dämmschicht hin bewegt, so dass ein unterhalb des Stempels angeordneter Rohrhalter in den Untergrund bzw. in die Dämmschicht eingestoßen wird. Es liegt weiterhin im Rahmen der Erfindung, dass nach dem Einstoßen eines Rohrhalters der nächste auf der Magazinstange magazinierte Rohrhalter in den Bereich unterhalb des Stempels nachrutscht bzw. nachgeführt wird. Dann ist die Vorrichtung zum Einstoßen des nächsten Rohrhalters betriebsbereit. - Zweckmäßigerweise ist die Magazinstange an die Stempeleinrichtung der Vorrichtung angeschlossen. Der obere Bereich der Magazinstange erstreckt sich vorzugsweise mit Abstand von der Basisstange vertikal entlang der Basisstange. Empfohlenermaßen ist die Magazinstange in ihrem unteren Bereich - zweckmäßigerweise vor der Stempeleinrichtung - für die Nachführung der Rohrhalter gebogen ausgebildet. Die Begriffe oberer Bereich, unterer Bereich und vertikal beziehen sich dabei auf den Betriebszustand der Vorrichtung bzw. auf den auf den Untergrund aufgestellten Zustand der Vorrichtung.

Erfindungsgemäß ist die Magazinstange der Vorrichtung mit der Maßgabe ausgebildet, dass wahlweise Rohrhalter unterschiedlicher Größe und/oder unterschiedlicher Form auf der Magazinstange aufgenommen bzw. bevorratet werden können. Unterschiedliche Größe von Rohrhaltern meint hier und nachfolgend insbesondere, dass die beiden U-Schenkel der unterschiedlichen Rohrhalter einen unterschiedlichen Abstand voneinander aufweisen. Wenn die U-Basis der erfindungsgemäß eingesetzten Rohrhalter gebogen bzw. teilkreisförmig gebogen ausgebildet ist, so können Rohrhalter unterschiedlicher Größe auch einen unterschiedlichen Radius der gebogenen bzw. teilkreisförmig gebogenen U-Basis aufweisen.

Es liegt im Rahmen der Erfindung, dass die Magazinstange zumindest eine Führungsschiene für die Rohrhalter aufweist. Es liegt weiterhin im Rahmen der Erfindung, dass U-förmige Rohrhalter mit ihrer U-Basis auf der Führungsschiene bzw. auf der Oberseite der Führungsschiene aufliegen. Zweckmäßigerweise ist die Führungsschiene bzw. die Breite b der Führungsschiene in Abhängigkeit von der Größe der aufzunehmenden Rohrhalter variierbar. Breite b der Führungsschiene meint die Erstreckung der Führungsschiene und insbesondere die größte Erstreckung der Führungsschiene quer bzw. senkrecht zur Längsrichtung der Führungsschiene bzw. zur Längsrichtung der Magazinstange. Die Breite b einer Führungsschiene wird vorzugsweise im oberen Bereich der Führungsschiene gemessen, auf dem in der Regel die U-Basis der aufzunehmenden Rohrhalter aufliegt. Diese Breite b der Führungsschiene ist zweckmäßigerweise an den Abstand der U-Schenkel der aufzunehmenden U-förmigen Rohrhalter angepasst.

Nach einer bevorzugten Ausführungsform der Erfindung weist die Führungsschiene eine Basis-Führungsschiene mit einer Breite b₁ auf und auf dieser Basis-Führungsschiene ist zumindest ein Führungsschienenaufsatz fixierbar, so dass die Führungsschiene nach dem Fixieren des Führungsschienenaufsatzes eine Breite b₂ aufweist. Dabei ist die Breite b₂ größer als die Breite b₁. Der zumindest eine Führungsschienenaufsatz erstreckt sich zweckmäßigerweise über die Länge der Basis-Führungsschiene bzw. im Wesentlichen über die Länge der Basis-Führungsschiene. Es liegt im Rahmen der Erfindung, dass die Basis-Führungsschiene der Magazinstange für die Aufnahme bzw. Bevorratung von kleineren Rohrhaltern vorgesehen ist. Die Breite b₁ der Basis-Führungsschiene ist dann an die Größe dieser kleineren Rohrhalter bzw. an den Abstand der U-Schenkel dieser kleineren Rohrhalter angepasst. Wenn größere Rohrhalter auf der Magazinstange aufgenommen bzw. bevorratet werden sollen, kann dann der Führungsschienenaufsatz an der Basis-Führungsschiene fixiert werden und dann weist die Führungsschiene (Basis-Führungsschiene mit aufgebrachtem Führungsschienenaufsatz) die Breite b₂ auf, die an die Größe dieser größeren Rohrhalter bzw. an den Abstand der U-Schenkel dieser größeren Rohrhalter angepasst ist. Es liegt im Rahmen der Erfindung, dass mehrere Führungsschienenaufsätze mit unterschiedlichen Breiten b vorgesehen sind, die an unterschiedliche Größen der aufzunehmenden Rohrhalter angepasst sind. Je nach Größe der aktuell verwendeten Rohrhalter kann dann der entsprechende Führungsschienenaufsatz mit der passenden Breite b an der Basis-Führungsschiene der Magazinstange fixiert werden. Ein Führungsschienenaufstz bzw. die Führungsschienenaufsätze kann/können auch bzw. zusätzlich an eine bestimmte Form eines Rohrhalters bzw. an unterschiedliche Formen der Rohrhalter angepasst sein.

Nach besonders bevorzugter Ausführungsform der Erfindung ist ein Führungsschienenaufsatz über eine Rastverbindung auf der Basis-Führungsschiene fixierbar. Ein Führungsschienenaufsatz ist also gleichsam auf der Basis-Führungsschiene aufrastbar. Empfohlenermaßen weist die Basis-Führungsschiene und weist ein Führungsschienenaufsatz einen U-förmigen Querschnitt mit Einschnürungen an den U-Seiten bzw. an den U-Schenkeln auf. Die Oberseite der Basis-Führungsschiene und die Oberseite eines Führungsschienenaufsatzes sind bevorzugt im Querschnitt omega-förmig ausgestaltet. Gemäß einer bewährten Ausführungsform der Erfindung kann ein nicht benutzter Führungsschienenaufsatz bzw. können nicht benutzte Führungsschienenaufsätze an der Basisstange fixiert werden. Es empfiehlt sich, den Führungsschienenaufsatz bzw. die Führungsschienenaufsätze über Rastverbindungen an der Basisstange zu fixieren.

Nach einer anderen Ausführungsform der Erfindung weist die Magazinstange der Vorrichtung einen Magazinträger auf, an dem eine Führungsschiene bzw. eine Basis-Führungsschiene auswechselbar fixiert ist, insbesondere angeschraubt ist. So können Führungsschienen bzw. Basis-Führungsschienen unterschiedlicher Breite b in Abhängigkeit von der Größe der gewünschten bzw. zu verwendenden Rohrhalter an dem Magazinträger der Magazinstange fixiert werden. Ebenso können Führungsschienen bzw. Basis-Führungsschienen unterschiedlicher Form in Abhängigkeit von der Form der eingesetzten Rohrhalter an dem Magazinträger der Magazinstange befestigt werden.

Nach einer weiteren bevorzugten Ausführungsform der Erfindung weist die Magazinstange der Vorrichtung auf einer ersten Seite eine erste Führungsschiene bzw. Basis-Führungsschiene auf und auf einer zweiten gegenüberliegenden Seite eine zweite Führungsschiene bzw. Basis-Führungsschiene auf. Bei dieser Ausführungsform ist die Magazinstange wahlweise mit ihrem einen Ende oder mit ihrem anderen Ende an die Stempeleinrichtung der Vorrichtung anschließbar, so dass entweder die erste Führungsschiene bzw. Basis-Führungsschiene oder die zweite Führungsschiene bzw. Basis-Führungsschiene der Basisstange und der Stempeleinrichtung zugewandt ist und somit für die Zuführung von Rohrhaltern zur Verfügung steht. Die Führungsschienen bzw. Basis-Führungsschienen erstrecken sich zweckmäßigerweise über die Länge der Magazinstange bzw. im Wesentlichen über die Länge der Magazinstange. Es liegt im Rahmen der Erfindung, dass die erste Führungsschiene eine Breite b₁ aufweist, die größer ist als die Breite b₂ der zweiten Führungsschiene. Auf der ersten und auf der zweiten Führungsschiene können somit also Rohrhalter unterschiedlicher Größe aufgenommen bzw. bevorratet werden. Gemäß einer besonders bevorzugten Ausführungsform der Erfindung ist die Magazinstange bzw. sind die Führungsschienen S-förmig ausgebildet. Es liegt im Rahmen der Erfindung, dass die Magazinstange mit den beiden Führungsschienen lösbar bzw. auswechselbar an die Stempeleinrichtung der Vorrichtung angeschlossen ist. Vorzugsweise ist die Magazinstange mittels einer Spanneinrichtung bzw. Schnellspanneinrichtung an die Stempeleinrichtung angeschlossen. Wenn die Magazinstange mit ihrem einen Ende an die Stempeleinrichtung angeschlossen ist, steht die der Basisstange bzw. der Stempeleinrichtung zugewandte Führungsschiene der Magazinstange für die Aufnahme bzw. für die Zuführung von Rohrhaltern einer ersten Größe zur Verfügung. Wenn Rohrhalter einer zweiten Größe aufgenommen bzw. zugeführt werden sollen, kann das eine Ende der Magazinstange von der Stempeleinrichtung gelöst werden, die Magazinstange gedreht werden und mit ihrem anderen Ende an die Stempeleinrichtung angeschlossen werden. Dann ist die andere Führungsschiene der Magazinstange der Basisstange und der Stempeleinrichtung zugewandt und steht zur Aufnahme bzw. Zuführung von Rohrhaltern der zweiten Größe zur Verfügung. Die Magazinstange kann beispielsweise über eine Rastverbindung oder über eine Steckverbindung oder über eine Schraubverbindung an die Stempeleinrichtung angeschlossen werden. - Nach einer Variante der Erfindung ist bei der vorstehend erläuterten Ausführungsform die erste Führungsschiene bzw. Basis-Führungsschiene auf der ersten Seite der Magazinstange an eine erste Form von Rohrhaltern angepasst bzw. entsprechend geformt. Bei dieser Variante ist dann die zweite Führungsschiene bzw. Basis-Führungsschiene an der zweiten Seite der Magazinstange an eine zweite Form von Rohrhaltern angepasst bzw. entsprechend geformt, wobei sich die zweite Form von der ersten Form unterscheidet. Es liegt im Rahmen der Erfindung, dass alle oben zu der Ausführungsform mit den beiden unterschiedlich ausgestalteten Seiten der Magazinstange erläuterten Merkmale auch auf diese Variante zutreffen können.

Gemäß einer weiteren bevorzugten Ausführungsform der Erfindung ist eine Führungswanne für die Rohrhalter vorgesehen, die sich entlang der Magazinstange erstreckt. Die U-Schenkel der auf einer Führungsschiene bzw. Basis-Führungsschiene geführten Rohrhalter sind in dieser Führungswanne aufgenommen. Vorzugsweise ist die Führungswanne U-förmig bzw. im Wesentlichen U-förmig ausgebildet. Empfohlenermaßen ist die Führungswanne in zwei benachbarte Führungskanäle unterteilt, wobei jeder Führungskanal einem U-Schenkel eines aufgenommenen Rohrhalters zugeordnet ist. Die auf der Führungsschiene bzw. Basis-Führungsschiene geführten Rohrhalter ragen also mit ihrem einen U-Schenkel in den einen Führungskanal der Führungswanne und mit ihrem anderen U-Schenkel in den anderen Führungskanal der Führungswanne. Es empfiehlt sich, dass die Führungsschiene bzw. die Basis-Führungsschiene zumindest über einen Teil ihrer Höhe und bevorzugt vollständig innerhalb der Führungswanne angeordnet ist.

Es wurde bereits oben dargelegt, dass mit dem vertikal bewegbaren Stempel der Stempeleinrichtung ein Rohrhalter in den Untergrund bzw. in die Dämmschicht eingestoßen werden kann und dass dadurch ein von dem Rohrhalter übergriffenes Rohr bzw. Heizungsrohr an dem Untergrund bzw. an der Dämmschicht fixiert wird. Es liegt im Rahmen der Erfindung, dass der Stempel mit der Maßgabe ausgebildet ist, dass mit dem Stempel Rohrhalter unterschiedlicher Größe in den Untergrund bzw. in die Dämmschicht einbringbar sind. Empfohlenermaßen weist der Stempel dazu eine entsprechend ausgelegte untergrundseitige Ausnehmung zur Aufnahme des oberen Bereichs der Rohrhalter auf. Oberer Bereich eines Rohrhalters meint insbesondere die U-Basis eines U-förmigen Rohrhalters.

Es empfiehlt sich im Übrigen, dass auf der Führungsschiene bzw. auf der Basis-Führungsschiene und/oder in der Führungswanne ein Nachdrückelement geführt ist, das die Rohrhalter in Richtung Stempeleinrichtung bzw. in Richtung Stempel drückt. Bei dem Nachdrückelement handelt es sich zweckmäßigerweise um ein Masseelement, das auf dem obersten der auf der Magazinstange magazinierten Rohrhalter aufliegt. Auf diese Weise werden die Rohrhalter in Richtung Stempeleinrichtung gedrückt bzw. geschoben. Sobald ein Rohrhalter mit Hilfe des Stempels in den Untergrund eingestoßen wurde, kann ein weiterer Rohrhalter in den Bereich unter dem Stempel nachrutschen und kann anschließend ebenfalls in den Untergrund eingestoßen werden.

Eine besonders bevorzugte Ausführungsform der Erfindung ist dadurch gekennzeichnet, dass ein Fußpedal vorgesehen ist, durch dessen Betätigung der Stempel zum Einbringen eines Rohrhalters zum Untergrund hin bewegbar ist. Zweckmäßigerweise ist das Fußpedal im Bereich der bzw. auf Höhe der Stempeleinrichtung angeordnet. Es liegt im Rahmen der Erfindung, dass das Fußpedal über zumindest ein Verbindungselement an den Stempel angeschlossen ist und bevorzugt unmittelbar über dieses Verbindungselement mit dem Stempel verbunden ist. Empfohlenermaßen weist die Stempeleinrichtung zumindest ein Langloch bzw. zumindest ein vertikales Langloch auf und das zumindest eine an den Stempel angeschlossene Verbindungselement durchgreift dieses Langloch. Zweckmäßigerweise ist das Fußpedal an der dem Magazin bzw. der Magazinstange gegenüberliegenden Seite der Stempeleinrichtung an der Stempeleinrichtung angeordnet. Es liegt im Rahmen der Erfindung, dass die Betätigung des Handgriffes der erfindungsgemäßen Vorrichtung durch die Betätigung des Fußpedals unterstützt werden kann oder umgekehrt. Handgriff und Fußpedal können aber auch einzeln bzw. separat betätigt werden.

Der Erfindung liegt die Erkenntnis zugrunde, dass mit ein und derselben erfindungsgemäßen Vorrichtung Rohrhalter verschiedener Größe auf einfache und wenig aufwendige Weise zum Fixieren von Rohren mit unterschiedlichen Außendurchmessern eingesetzt werden können. Das gilt im Übrigen insbesondere auch für relativ geringe Außendurchmesser von Rohren bis zu 10 mm und für die dazu ausgelegten Rohrhalter geringer Größe. Die erfindungsgemäße Vorrichtung kann problemlos und zügig an unterschiedliche Größen und auch an unterschiedliche Formen von Rohrhaltern angepasst werden. Die Rohrhalter können nichtsdestoweniger funktionssicher und präzise in den Untergrund eingebracht werden. Die zugeordneten Rohre können effektiv an dem Untergrund bzw. an der Dämmschicht fixiert werden. Die erfindungsgemäße Vorrichtung ist nichtsdestoweniger mit geringem Aufwand und insbesondere auch mit geringem Kostenaufwand realisierbar. Im Übrigen können die Rohrhalter auf einfache Weise und vor allem ohne zusätzliches Spezialwerkzeug auf der Magazinstange der Vorrichtung magaziniert werden.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Darstellung einer ersten Ausführungsform der erfindungsgemäßen Vorrichtung,
- Fig. 2: den unteren Bereich der Magazinstange der Vorrichtung gemäß Fig. 1 in perspektivischer Darstellung,
- Fig. 3: eine perspektivische Darstellung einer zweiten Ausführungsform der erfindungsgemäßen Vorrichtung,
- Fig. 4: eine Seitenansicht des unteren Bereichs der Vorrichtung gemäß Fig. 3,
- Fig. 5a, b: zwei unterschiedliche Funktionsstellungen der Magazinstange der Vorrichtung nach Fig. 3,
- Fig. 6: eine perspektivische Darstellung einer dritten Ausführungsform der erfindungsgemäßen Vorrichtung,
- Fig. 7a, b: den unteren Bereich der Magazinstange der Vorrichtung gemäß Fig. 6 in zwei unterschiedlichen Funktionsstellungen,
- Fig. 8: eine perspektivische Darstellung der Magazinstange einer vierten Ausführungsform der erfindungsgemäßen Vorrichtung und
- Fig. 9a, b: einen Stempel einer erfindungsgemäßen Vorrichtung in zwei unterschiedlichen Funktionsstellungen.

Die Figuren zeigen eine erfindungsgemäße Vorrichtung für die Bevorratung und Zuführung von U-förmigen Rohrhaltern 1 zur Fixierung von Rohren 2 bzw. Heizungsrohren an einem Untergrund 3, insbesondere an einer wärmeisolierenden Dämmschicht. Die Vorrichtung weist eine Basisstange 4 und einen am oberen Ende der Basisstange 4 angeschlossenen Handgriff 5 auf. Am unteren Ende der Basisstange 4 ist eine Stempeleinrichtung 6 angeschlossen und in dieser Stempeleinrichtung 6 ist ein vertikal bewegbarer Stempel 7 zum Einstoßen der Rohrhalter 1 in den Untergrund 3 geführt. Die erfindungsgemäße Vorrichtung weist weiterhin eine Magazinstange 8 für die Aufnahme bzw. Bevorratung einer Mehrzahl von Rohrhaltern 1 auf. Erfindungsgemäß ist die Magazinstange 8 mit der Maßgabe ausgebildet, dass wahlweise Rohrhalter unterschiedlicher Größe auf der Magazinstange 8 aufgenommen bzw. bevorratet werden können. Die Magazinstange 8 ist mit ihrem unteren Bereich an die Stempeleinrichtung 6 der Vorrichtung angeschlossen. Die Magazinstange 8 weist zumindest eine Führungsschiene 9 für die Aufnahme der Rohrhalter 1 auf.

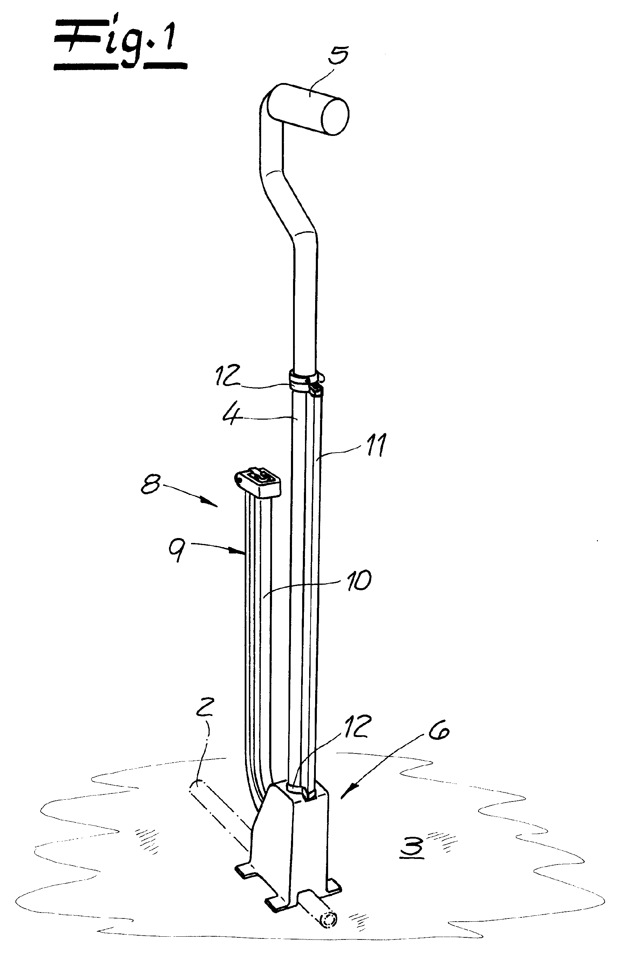

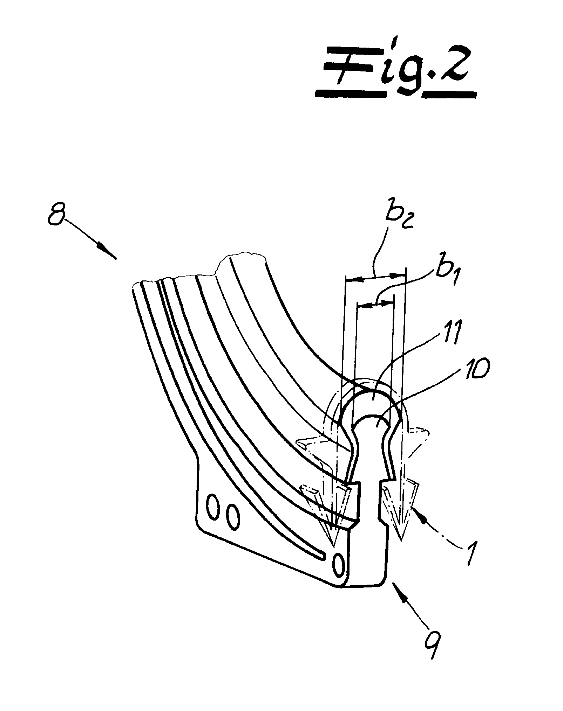

Die Fig. 1 und 2 betreffen eine erste Ausführungsform einer erfindungsgemäßen Vorrichtung. Bei dieser Ausführungsform weist die Führungsschiene 9 eine Basis-Führungsschiene 10 mit einer Breite b₁ auf. Diese Basis-Führungsschiene 10 ist in nicht näher dargestellter Weise für die Aufnahme und Führung von Rohrhaltern 1 geringerer Größe ausgelegt. Diese Rohrhalter 1 geringerer Größe liegen dann also unmittelbar auf der Basis-Führungsschiene 10 auf und werden von dieser Basis-Führungsschiene 10 geführt bzw. zugeführt. Zweckmäßigerweise und im Ausführungsbeispiel (Fig. 2) weist die Basis-Führungsschiene 10 einen U-förmigen Querschnitt mit Einschnürungen an den U-Seiten auf. Es liegt im Rahmen der Erfindung, dass auf der Basis-Führungsschiene 10 ein Führungsschienenaufsatz 11 fixierbar ist, der sich zweckmäßigerweise über die Länge der Basis-Führungsschiene 10 erstreckt. Nach dem Aufbringen bzw. Fixieren des Führungsschienenaufsatzes 11 weist die Führungsschiene 9 eine Breite b₂ auf, wobei diese Breite b₂ größer ist als die Breite b₁ der Basis-Führungsschiene 10. Die Führungsschiene mit der größeren Breite b₂ ist dann für die Aufnahme von größeren Rohrhaltern 1 ausgelegt. Der Führungsschienenaufsatz 11 weist bevorzugt und im Ausführungsbeispiel ebenfalls einen U-förmigen Querschnitt mit Einschnürungen an den U-Schenkeln auf. Empfohlenermaßen und im Ausführungsbeispiel ist der Führungsschienenaufsatz 11 auf der Basis-Führungsschiene 10 aufrastbar. Wie in der Fig. 1 dargestellt ist, kann ein nicht benötigter Führungsschienenaufsatz 11 an der Basisstange 4 fixiert und vorgehalten werden. Der nicht benötigte Führungsschienenaufsatz 11 ist hier über ringförmige Haltevorrichtungen 12 an der Basisstange 4 befestigt.

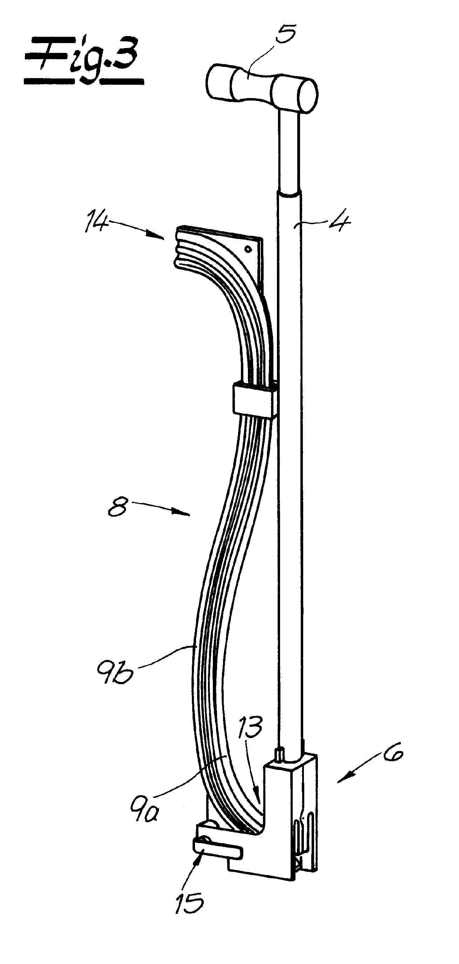

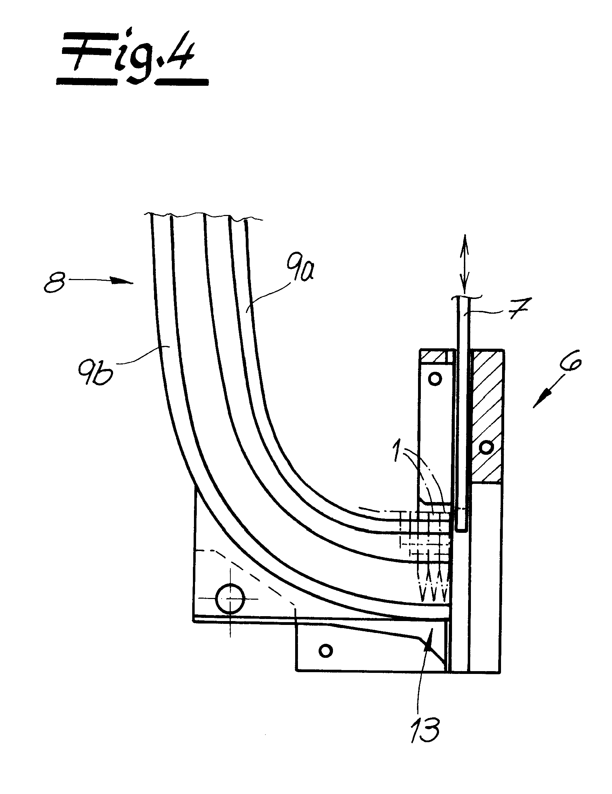

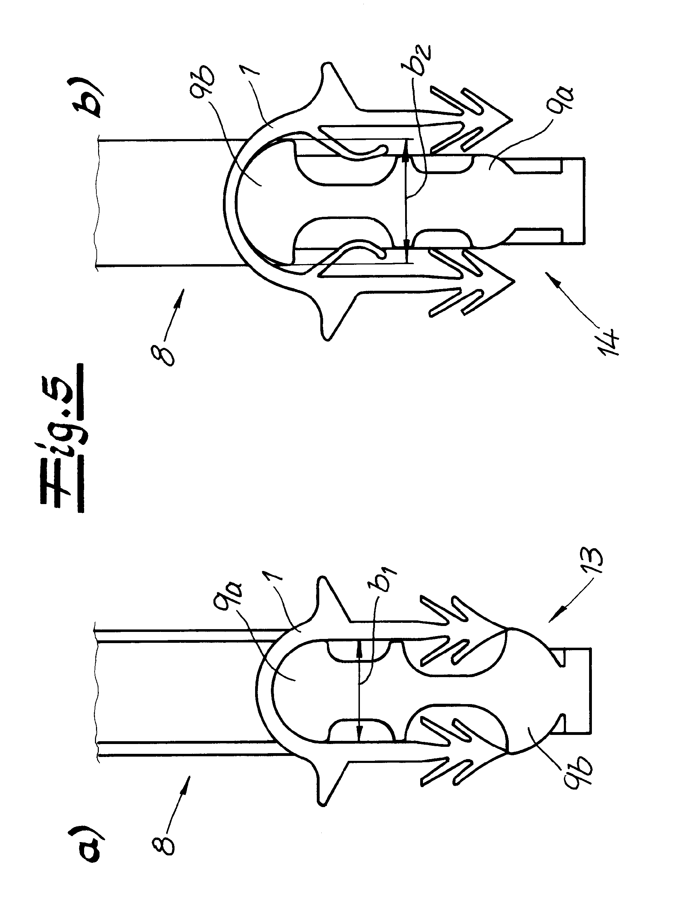

Die Fig. 3, 4 und 5 beziehen sich auf eine zweite Ausführungsform der erfindungsgemäßen Vorrichtung. Die Magazinstange 8 dieser Vorrichtung weist auf einer ersten Seite eine erste Führungsschiene 9a auf und auf einer zweiten gegenüberliegenden Seite eine zweite Führungsschiene 9b auf. Die beiden Führungsschienen 9a und 9b haben unterschiedliche Breiten b₁, b₂ und sind somit für die Aufnahme von Rohrhaltern 1 unterschiedlicher Größe ausgelegt. Erfindungsgemäß ist die Magazinstange 8 wahlweise mit ihrem einen Ende 13 oder mit ihrem anderen Ende 14 an die Stempeleinrichtung 6 der Vorrichtung anschließbar, so dass entweder die erste Führungsschiene 9a oder die zweite Führungsschiene 9b der Basisstange 4 und der Stempeleinrichtung 6 zugewandt ist und für die Zuführung von Rohrhaltern 1 zur Verfügung steht. Im Ausführungsbeispiel ist die Magazinstange 8 lösbar mittels einer Schnellspanneinrichtung 15 an die Stempeleinrichtung 6 angeschlossen bzw. an der Stempeleinrichtung 6 fixiert. Empfohlenermaßen und im Ausführungsbeispiel ist die Magazinstange 8 im Übrigen S-förmig ausgebildet. In der Fig. 5a ist die Aufnahme eines Rohrhalters 1 geringerer Größe auf der ersten Führungsschiene 9a der Magazinstange 8 dargestellt. Dagegen zeigt Fig. 5b die Aufnahme eines größeren Rohrhalters 1 auf der zweiten Führungsschiene 9b der Magazinstange 8.

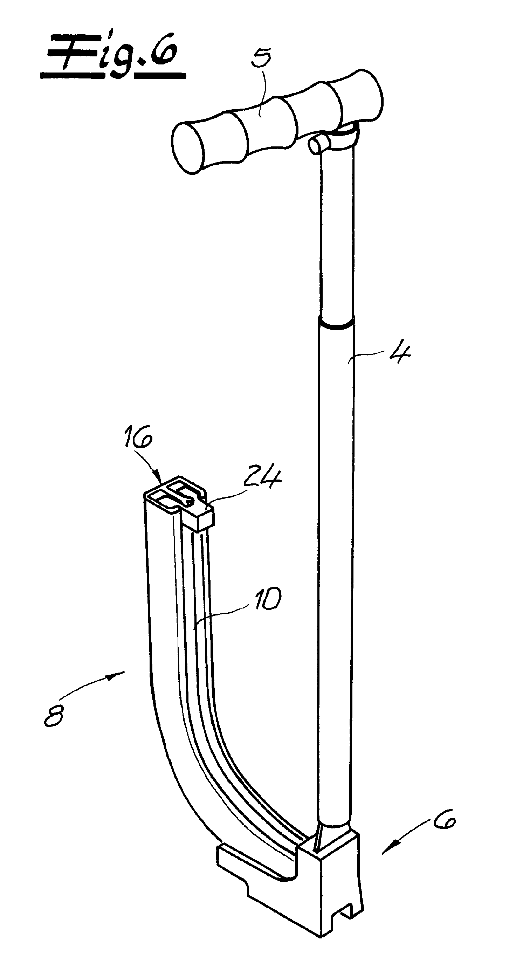

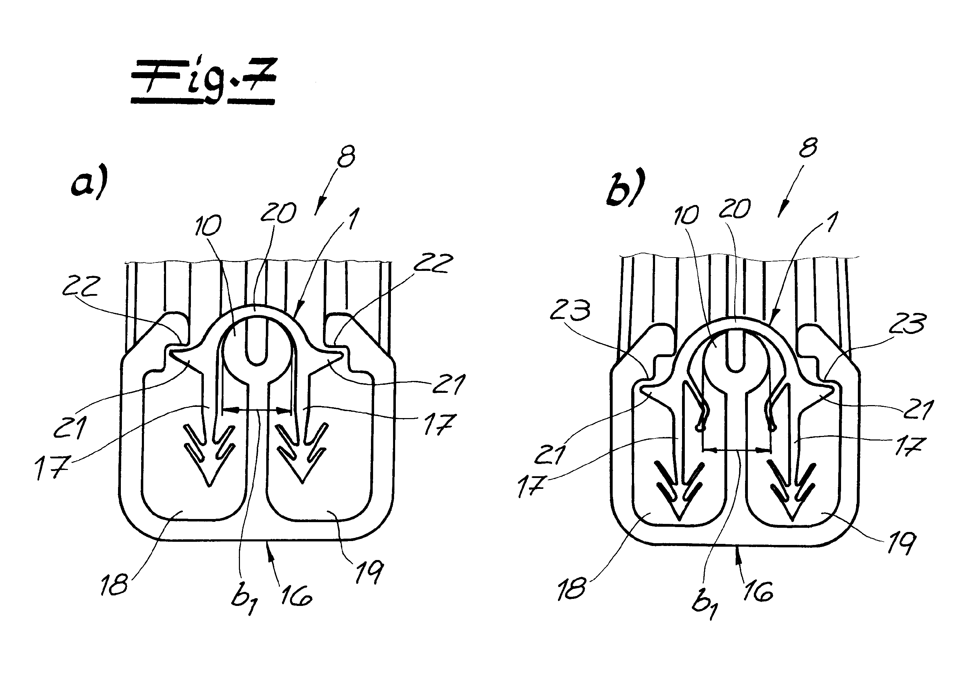

Die Fig. 6 und 7 betreffen eine dritte Ausführungsform einer erfindungsgemäßen Vorrichtung. Bei dieser Ausführungsform ist eine Führungswanne 16 für die Aufnahme der Rohrhalter 1 vorgesehen, die sich entlang der Magazinstange 8 erstreckt. Die Rohrhalter 1 liegen auf der im oberen Bereich der Führungswanne 16 angeordneten Basis-Führungsschiene 10 auf und ragen mit ihren U-Schenkeln 17 in die Führungswanne 16. Zweckmäßigerweise und im Ausführungsbeispiel ist die Führungswanne 16 U-förmig ausgebildet und in zwei Führungskanäle 18, 19 unterteilt. Der eine U-Schenkel 17 jedes Rohrhalters 1 ragt dabei in den einen Führungskanal 18 und der andere U-Schenkel 17 jedes Rohrhalters 1 ragt in den anderen Führungskanal 19 (siehe insbesondere Fig. 7a, b). Die Fig. 7a zeigt die Aufnahme eines Rohrhalters 1 geringerer Größe auf der Basis-Führungsschiene 10. Die Größe dieses Rohrhalters 1 passt zu der Breite b₁ der Basis-Führungsschiene 10. Der Rohrhalter 1 liegt mit seiner U-Basis 20 gleichsam formschlüssig auf der Basis-Führungsschiene 10 auf. Dagegen zeigt die Fig. 7b die Aufnahme eines größeren Rohrhalters 1 auf der Basis-Führungsschiene 10. Die Breite b₁ der Basis-Führungsschiene 10 ist hier deutlich geringer als der Abstand der beiden U-Schenkel 17 dieses Rohrhalters 1. Aus Fig. 7b wird aber deutlich, dass auch der größere Rohrhalter 1 aufgrund der Führung in der Führungswanne 16 sicher bzw. verliersicher auf der Magazinstange 8 dieser Ausführungsform aufgenommen ist. Die Führung der Rohrhalter 1 in der Führungswanne 16 bzw. in den Führungskanälen 18, 19 wird nach Fig. 7a und 7b weiterhin dadurch unterstützt, dass die als Einstoßhilfen dienenden seitlichen Vorsprünge 21 der Rohrhalter 1 entsprechend ausgelegte Hinterschneidungen 22, 23 der Führungswanne 16 hintergreifen. In der Fig. 6 ist im Übrigen erkennbar, dass in der Führungswanne 16 ein als Masseelement 24 ausgebildetes Nachdrückelement geführt ist, das auf dem obersten der magazinierten Rohrhalter 1 aufliegt und somit die Rohrhalter 1 mit seiner Gewichtskraft in Richtung Stempeleinrichtung 6 drückt.

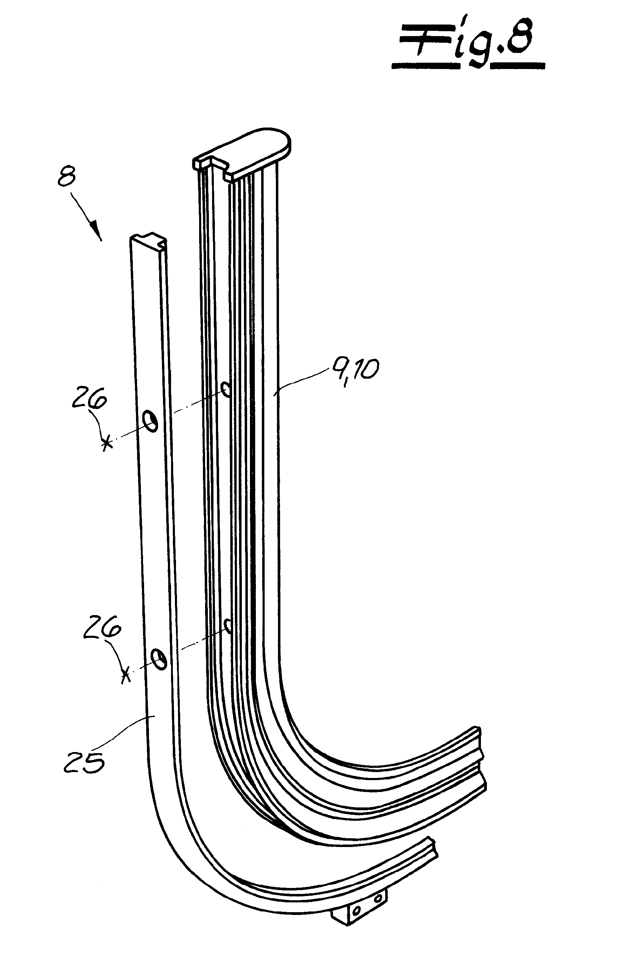

Die Fig. 8 bezieht sich auf eine vierte Ausführungsform einer erfindungsgemäßen Vorrichtung. Dargestellt ist dort die Magazinstange 8 dieser Vorrichtung. Diese Magazinstange 8 weist einen Magazinträger 25 auf, an dem eine Führungsschiene 9 bzw. eine Basis-Führungsschiene 10 auswechselbar fixierbar ist. Im Ausführungsbeispiel erfolgt diese Fixierung durch Verschraubung bzw. mit Hilfe von Schrauben 26. Es ist aber auch möglich, dass die Führungsschiene 9 auf den Magazinträger 25 aufgesteckt wird und durch eine Rastverbindung und/oder eine Klemmverbindung gehalten wird. Bei dieser Ausführungsform können also Führungsschienen 9 bzw. Basis-Führungsschienen 10 verschiedener Breite an dem Magazinträger 25 befestigt werden und auf diese Weise kann die Magazinstange 8 an die Größe der aufzunehmenden Rohrhalter 1 angepasst werden.

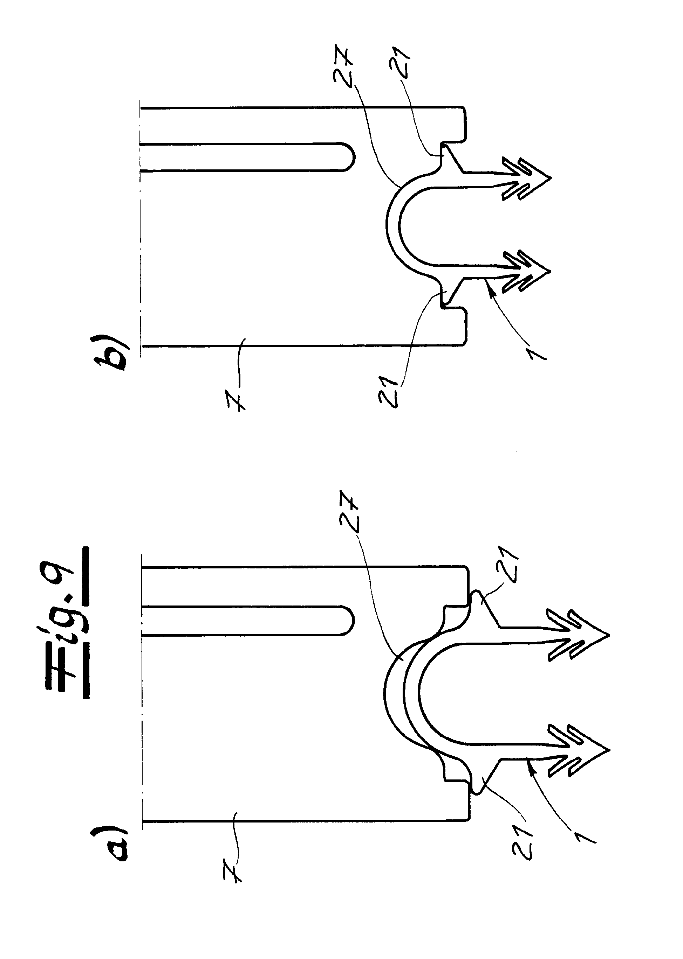

In der Fig. 9 ist ein Stempel 7 einer erfindungsgemäßen Vorrichtung dargestellt, der zum Einstoßen der Rohrhalter 1 in den Untergrund dient. Aus einer vergleichenden Betrachtung der Fig. 9a und 9b wird deutlich, dass der Stempel 7 zum Einstoßen von Rohrhaltern 1 unterschiedlicher Größe eine entsprechend ausgelegte untergrundseitige Ausnehmung 27 aufweist. In dieser Ausnehmung wird der obere Bereich eines Rohrhalters 1 aufgenommen und der Stempel 7 kann sowohl bei dem größeren Rohrhalter 1 in der Fig. 9a als auch bei dem kleineren Rohrhalter 1 in der Fig. 9b auf die als Einstoßhilfen dienenden seitlichen Vorsprünge 21 der Rohrhalter 1 einwirken.

## Patentansprüche

1. Vorrichtung für die Bevorratung und Zuführung von Rohrhaltern, insbesondere von U-förmigen Rohrhaltern (1) zur Fixierung von Rohren (2), insbesondere von Heizrohren einer Fußbodenheizung, an einem Untergrund (3), insbesondere an einer wärmeisolierenden Dämmschicht,
wobei die Vorrichtung eine Basisstange (4) mit einem daran angeschlossenen Handgriff (5) sowie eine an die Basisstange (4) angeschlossene Stempeleinrichtung (6) mit einem bewegbaren Stempel (7) zum Einbringen der Rohrhalter (1) in den Untergrund (3) aufweist,
wobei die Vorrichtung fernerhin mit zumindest einer Magazinstange (8) für die Aufnahme bzw. Bevorratung einer Mehrzahl von Rohrhaltern (1) ausgestattet ist und wobei die Magazinstange (8) mit der Maßgabe ausgebildet ist, dass wahlweise Rohrhalter (1) unterschiedlicher Größe und/oder unterschiedlicher Form aufgenommen bzw. bevorratet werden können.

2. Vorrichtung nach Anspruch 1, wobei die Magazinstange (8) zumindest eine Führungsschiene (9) aufweist und wobei die Breite b der Führungsschiene (9) in Abhängigkeit von der Größe der aufzunehmenden Rohrhalter (1) variierbar ist.

3. Vorrichtung nach Anspruch 2, wobei die Führungsschiene (9) eine Basis-Führungsschiene (10) mit einer Breite b₁ aufweist und wobei auf dieser Basis-Führungsschiene zumindest ein Führungsschienenaufsatz (11) fixierbar ist, so dass die Führungsschiene (9) nach dem Fixieren des Führungsschienenaufsatzes (11) eine Breite b₂ aufweist, wobei die Breite b₂ größer ist als die Breite b₁.

4. Vorrichtung nach Anspruch 3, wobei der Führungsschienenaufsatz (11) über eine Rastverbindung auf der Basis-Führungsschiene (10) fixierbar ist.

5. Vorrichtung nach einem der Ansprüche 3 oder 4, wobei zumindest ein vorübergehend nicht benutzter Führungsschienenaufsatz (11) lösbar an der Basisstange (4) fixierbar ist.

6. Vorrichtung nach einem der Ansprüche 1 bis 5, wobei die Magazinstange (8) einen Magazinträger (25) aufweist, an dem eine Führungsschiene (9) bzw. eine Basis-Führungsschiene (10) auswechselbar fixiert ist, insbesondere angeschraubt ist.

7. Vorrichtung nach einem der Ansprüche 1 bis 6, wobei die Magazinstange (8) auf einer ersten Seite eine erste Führungsschiene (9a) bzw. Basis-Führungsschiene (10a) aufweist und auf einer zweiten Seite eine zweite Führungsschiene (9b) bzw. Basis-Führungsschiene (10b) aufweist und wobei die Magazinstange (8) wahlweise mit ihrem einen Ende (13) oder mit ihrem anderen Ende (14) an die Stempeleinrichtung (6) anschließbar ist, so dass entweder die erste Führungsschiene (9a) bzw. Basis-Führungsschiene (10a) oder die zweite Führungsschiene (9b) bzw. Basis-Führungsschiene (10b) für die Zuführung von Rohrhaltern (1) zur Verfügung steht.

8. Vorrichtung nach Anspruch 7, wobei die erste Führungsschiene (9a) eine von der Breite b der zweiten Führungsschiene (9b) abweichende Breite b aufweist.

9. Vorrichtung nach einem der Ansprüche 7 oder 8, wobei die Magazinstange (8) S-förmig ausgebildet ist.

10. Vorrichtung nach einem der Ansprüche 1 bis 9, wobei die Magazinstange (8) lösbar bzw. auswechselbar an die Stempeleinrichtung (6) angeschlossen ist, vorzugsweise mittels einer Spanneinrichtung angeschlossen ist.

11. Vorrichtung nach einem der Ansprüche 1 bis 11, wobei eine Führungswanne (16) für die Rohrhalter (1) vorgesehen ist, die sich entlang der Magazinstange (8) erstreckt und wobei die U-Schenkel (17) der auf einer Führungsschiene (9) bzw. auf einer Basis-Führungsschiene (10) geführten Rohrhalter (1) in der Führungswanne (16) aufnehmbar bzw. aufgenommen sind.

12. Vorrichtung nach Anspruch 11, wobei die Führungsschiene (9) bzw. die Basis-Führungsschiene (10) innerhalb der Führungswanne (16) angeordnet ist.

13. Vorrichtung nach einem der Ansprüche 1 bis 12, wobei der Stempel (7) mit der Maßgabe ausgebildet ist, dass mit dem Stempel (7) Rohrhalter (1) unterschiedlicher Größe in den Untergrund (3) einbringbar sind und wobei nach bevorzugter Ausführungsform der Stempel (7) hierzu eine entsprechend ausgelegte untergrundseitige Ausnehmung (27) zur Aufnahme des oberen Bereichs eines Rohrhalters (1) aufweist.

14. Vorrichtung nach einem der Ansprüche 2 bis 13, wobei auf der Führungsschiene (9) bzw. auf der Basis-Führungsschiene (10) und/oder in der Führungswanne (16) ein Nachdrückelement geführt ist, das die Rohrhalter (1) in Richtung Stempeleinrichtung (6) drückt.

15. Vorrichtung nach einem der Ansprüche 1 bis 14, wobei fernerhin ein Fußpedal vorgesehen ist, durch dessen Betätigung der Stempel (7) zum Einbringen eines Rohrhalters (1) zum Untergrund (3) hin bewegbar ist.
